# FASCICULE DE BREVET EUROPEEN

(11) **EP 3 946 763 B1**
(45) Date de publication et mention de la délivrance du brevet: **24.01.2024**
(21) Numéro de dépôt: 20724892.3
(22) Date de dépôt: 02.04.2020
(51) Int. Cl.: B08B 3/02, B08B 9/032, F24H 1/00, F24H 8/00

(54) **DISPOSITIF MOBILE DE TRAITEMENT DE L'EAU**
MOBILE WASSERBEHANDLUNGSVORRICHTUNG
MOBILE WATER TREATMENT DEVICE

(30) Priorité: 03.04.2019 US 201962828625 P
(43) Date de publication de la demande: 09.02.2022
(73) Titulaire: Prodose, 31670 Labège (FR); Boukari, Morou, 31400 Toulouse (FR)
(72) Inventeur: BOUKARI, Morou, 31400 Toulouse (FR)
(74) Mandataire: Vuillermoz, Bruno
(86) Numéro de dépôt international: PCT/FR2020/000083
(87) Numéro de publication internationale: WO 2020/201643

(56) Documents cités:
- EP-A1- 3 021 989
- WO-A1-01/92164
- WO-A1-2011/000001
- US-A1- 2018 085 796

## Description

### DOMAINE D'APPLICATION DE L'INVENTION

L'invention concerne la fourniture par un dispositif mobile d'une pluralité de services liés à la fourniture d'eau chaude, au traitement de l'eau, au nettoyage des canalisations de fourniture d'eau potable ou de liquide alimentaire.

### DESCRIPTION DE L'ART ANTÉRIEUR

Il existe dans l'art antérieur différents dispositifs et procédés liés au traitement de l'eau, au nettoyage des canalisations et à la fourniture d'eau chaude. Certains documents proposant ces solutions sont décrits ci-dessous.

Le document EP1289890 décrit un dispositif de dosage d'un réactif par dissolution dans un écoulement de liquide.

Le document FR2946622 décrit un procédé de traitement du circuit d'eau potable d'un aéronef, dispositif et aéronef permettant de la mettre en oeuvre.

Le document FR3011754 décrit un procédé de traitement à des fins de nettoyage des canalisations d'un réseau d'eau potable d'un aéronef.

Le document EP2718033 décrit un procédé de nettoyage dynamique des canalisations d'eau d'un véhicule et dispositif permettant de la mettre en oeuvre.

Le document EP3055080 décrit un procédé de traitement à des fins de nettoyage des canalisations d'un réseau d'eau potable d'un aéronef

Le document EP3021989 décrit un dispositif de nettoyage des canalisations du réseau d'eau potable d'un aéronef. Ce document décrit notamment un dispositif indépendant de l'aéronef venant se connecter audit réseau de manière ponctuelle et étant alimenté en liquide. Ce dispositif comprend une pluralité d'éléments fonctionnels nécessaires à la production d'un liquide chaux ainsi qu'un châssis mobile supportant une chaudière à gaz à foyer fermé à condensation ledit dispositif accueillant plusieurs bouteilles de gaz proposant un volume de gaz suffisant susceptible de fournir l'énergie nécessaire à la production d'une grosse quantité de chaleur sur une période très courte.

Le document US2018/085796 A1 décrit un dispositif selon le préambule de la revendication 1.

### BRÈVE DESCRIPTION DE L'INVENTION

Les demandeurs ont mené des recherches visant une exploitation sur un plus grand volume du dernier dispositif décrit. Ces recherches ont abouti à la conception et à la réalisation d'un dispositif mobile réunissant une pluralité de sous-ensembles fonctionnels mettant en oeuvre non seulement les fonctions du dernier dispositif décrit sur un plus grand volume mais également les autres procédés et dispositif.

D'une manière générale, ce dispositif mobile de l'invention propose des services liés à la fourniture d'eau chaude, au traitement de l'eau, au nettoyage de toutes surfaces fixes ou mobiles tels des moteurs d'aéronefs, des canalisations de fourniture d'eau potable ou de liquide alimentaire.

La multiplication et/ou le surdimensionnement des moyens techniques à des fins de traitement d'un grand volume, la réunion dans un seul dispositif mobile avec des contraintes d'encombrement et de masse ont eu pour conséquences des problèmes techniques nouveaux solutionnés par les caractéristiques de l'invention.

Selon l'invention, le dispositif de services liés à la fourniture d'eau chaude, au traitement de l'eau, au nettoyage de toutes surfaces fixes ou mobiles, est remarquable en ce qu'il est mobile et comprend un châssis interne accueillant en partie basse un bac de récupération d'éventuels fluides et un sous-ensemble de production d'eau chaude avec au moins une chaudière à condensation associée à au moins un module d'alimentation en gaz formé par une pluralité de réservoirs de gaz stockant dans leur volume interne le gaz à l'état liquide en partie basse et à l'état gazeux en partie haute, lesdits réservoirs étant équipés chacun d'un tuyau de passage du gaz reliant la partie haute contenant le gaz à l'état gazeux à un orifice d'ouverture.

Le gaz puisé est donc systématiquement en phase gazeuse. La présence d'un carburateur et ou d'un vaporisateur n'est plus nécessaire ce qui évite des équipements supplémentaires entre la ou les chaudières et les réservoirs. Le volume haut de la bouteille sert de chambre d'évaporation.

Cette caractéristique évite donc des investissements, économise le volume et le poids de la charge à transporter.

Également selon l'invention, le dispositif de services liés à la fourniture d'eau chaude, au traitement de l'eau, au nettoyage de toutes surfaces fixes ou mobiles, est remarquable en ce que le dispositif est mobile, comprend un châssis interne accueillant en partie basse un bac de récupération des éventuels fluides et un sous-ensemble de production d'eau chaude avec au moins une chaudière à condensation associée à au moins un module d'alimentation en gaz formé par une pluralité de bouteilles de gaz de type de carburation stockant dans leur volume interne le gaz à l'état liquide en partie basse et à l'état gazeux en partie haute, lesdites bouteilles de gaz étant disposées, dans le châssis interne sensiblement horizontalement et avec l'orifice d'ouverture orienté vers le haut de sorte que l'extrémité du tuyau de passage du gaz débouche sur une partie gazeuse allongée plus grande.

La présence du châssis sert d'interface de mise en position et de maintien en position entre les parois du véhicule constitué par le dispositif et les sous-ensembles fonctionnels. Il permet d'accueillir selon une orientation optimisée lesdites bouteilles. La présence d'un bac de récupération des éventuels fluides évite l'accumulation de fluides dans ce volume.

Le dispositif de l'invention comprend au moins une conduite d'entrée et des câbles électriques pour se connecter à une source d'alimentation en eau froide ainsi qu'à une source d'alimentation en électricité. Le gaz nécessaire aux chaudières est stocké dans des bouteilles qui sont transportées par le dispositif.

Le dispositif de l'invention comprend en outre au moins une conduite de sortie lui permettant de venir se connecter à l'installation nécessitant son intervention comme :
- le réseau d'eau potable d'un véhicule tel d'un aéronef,
- les canalisations d'une installation où circule un liquide alimentaire,
- un réseau d'eau nécessitant de l'eau chaude,
- toutes surfaces à nettoyer fixes ou mobiles tels des moteurs d'aéronefs,
- etc...

L'avantage d'un tel dispositif est qu'il permet de regrouper dans un même volume mobile une pluralité de sous-ensembles fonctionnels susceptibles de mettre en oeuvre associés ou non une pluralité de services liés à l'exploitation des installations ci-dessus listées.

Le dispositif mobile est un véhicule de type camion ou camionnette équipée d'un volume utile dans lequel sont disposés le châssis et les différents sous-ensembles sur le châssis.

Lesdits sous-ensembles fonctionnels accueillis sur le châssis sont les suivants :
- sous-ensemble de production d'eau chaude,
- sous-ensemble de traitement de liquide,
- sous-ensemble d'injection dosée d'eau froide,
- etc...

Afin de produire l'eau chaude dans un plus grand volume et toujours dans un temps très cours, le sous-ensemble de production d'eau chaude comprend une pluralité de chaudières à gaz à condensation indépendantes. Ce sous-ensemble multiplie les installations décrites dans le document EP3021989 afin de multiplier ses capacités.

Selon un mode de réalisation préféré mais non limitatif, le sous-ensemble réunit trois chaudières identiques indépendantes.

La multiplication des chaudières pour chauffer de l'eau venant d'une même source et pour fournir de l'eau chaude vers une même destination requiert des caractéristiques particulières.

Ainsi, selon l'invention, le dispositif comprend une conduite d'entrée de l'eau froide et une conduite de sortie d'eau chaude, l'ordre d'alimentation en eau des chaudières du fait de leur position par rapport à la conduite d'entrée de l'eau froide est inversé par rapport à l'ordre de sortie d'eau chaude de par leur position par rapport à la conduite de sortie de l'eau chaude.

Le sous-ensemble fonctionnel de traitement de liquide est un sous-ensemble de traitement de liquide par dissolution d'un produit de traitement solide dans un flux dudit liquide, ledit produit de traitement solide étant conditionné sous forme de tablettes empilées dans des cartouches interchangeables. Selon l'invention, ce sous-ensemble est remarquable en ce que la base dans laquelle s'introduit ladite cartouche est équipée d'un bac de récupération de l'eau susceptible de couler pendant le changement de cartouche.

Cette caractéristique évite la projection de liquide issu de ce sous-ensemble dans le volume utile.

Le sous-ensemble d'injection dosée d'eau froide comprend une pompe doseuse en eau froide injectant dans la conduite de sortie du dispositif l'eau froide pour réguler le flux et la température.

Les chaudières sont alimentées en électricité en étant branchées sur le secteur. Le dispositif de l'invention comprend, en sus d'un module d'alimentation en gaz, un module d'alimentation en électricité équipé d'un moyen de contrôle de polarité vérifiant que cette dernière soit compatible avec l'alimentation des chaudières un redresseur étant activé dans le cas contraire.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

[Fig.1] représente un exemple de véhicule accueillant les sous-ensembles fonctionnels du dispositif ;
[Fig.2] est un dessin schématique illustrant les différents sous-ensembles fonctionnels du dispositif ;
[Fig.3] est un dessin schématique d'une vue en coupe d'une bouteille de gaz de carburation.

### DESCRIPTION D'UN MODE DE RÉALISATION

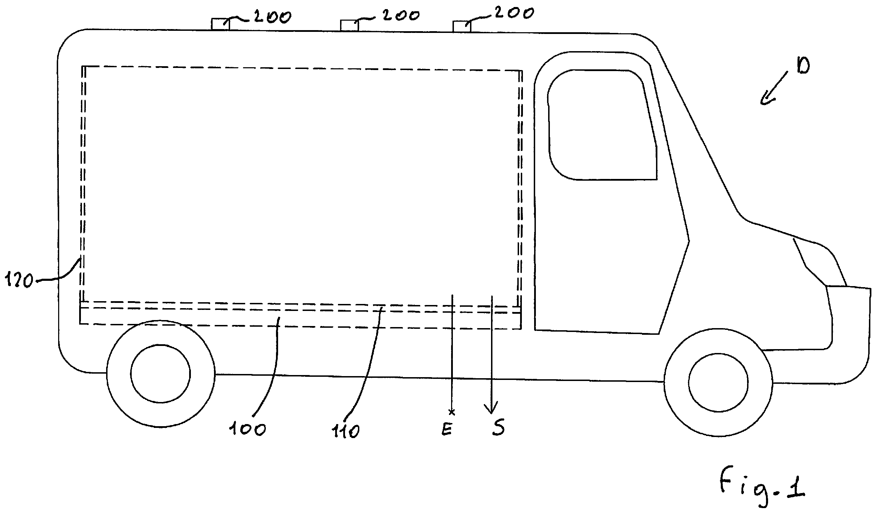

Comme illustré sur le dessin de la figure 1, le dispositif référencé D dans son ensemble est un dispositif mobile automoteur tel un camion ou une camionnette qui accueille dans sa partie arrière ou volume utile une pluralité de sous-ensembles fonctionnels nécessaires à des services de fournitures d'eau chaude, de nettoyage de conduites d'eau ou de liquide alimentaire.

Ce dispositif D se déplace sur son lieu d'exploitation tel un atelier aéronautique à des fins de nettoyage des conduites formant le réseau d'eau potable d'un avion.

Le dispositif D est équipé d'une conduite d'entrée E de liquide et d'une conduite de sortie S du liquide passé par au moins un des sous-ensembles fonctionnels équipant le dispositif D.

Comme illustrée, la partie basse du volume utile est occupée par un bac de récupération 100 des fluides et par un caillebotis 110 disposé sur le bac 110. La partie haute accueille un châssis 120 de support des différents sous-ensembles fonctionnels. La paroi supérieure du camion est ménagée d'ouvertures 200 pour laisser s'échapper les gaz.

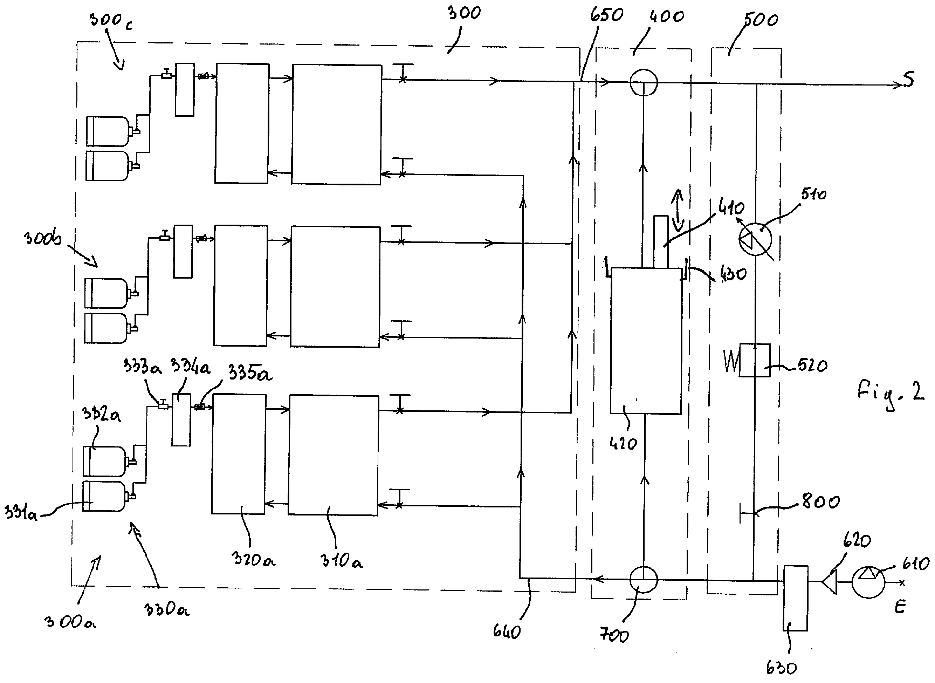

Le schéma de la figure 2 illustre à partir de la conduite d'entrée E, les différents sous-ensembles fonctionnels par lesquels peut passer l'eau qui peut être issue du réseau d'eau potable du lieu d'exploitation du dispositif.

Cette eau peut être traitée selon les procédés et par les dispositifs décrits dans les documents de l'art antérieur cités plus haut et/ou pour mettre en oeuvre les procédés décrits dans lesdits documents.

Conformément à l'invention, le dispositif D comprend :
- un sous-ensemble de production d'eau chaude 300,
- un sous-ensemble de traitement de liquide 400,
- un sous-ensemble d'injection dosée d'eau froide 500.

En amont de ces sous-ensembles fonctionnels, une pompe générale 610 associée à un clapet anti-retour 620 et à un module de filtration 630 mettent en mouvement et filtrent l'eau venant de l'entrée E.

Ces sous-ensembles peuvent fonctionner simultanément ou séparément selon le procédé à mettre en oeuvre, des vannes trois voies 700 ou robinets 800 actionnés automatiquement ou par un opérateur permettent de sélectionner entre des fonctionnements séparés ou simultanés.

Le sous-ensemble de production d'eau chaude 300 comprend trois modules identiques de production d'eau chaude 300a, 300b, 300c montés en parallèle à partir d'une conduite 640 amenant l'eau issue du module de filtration 630. Il est prévu que ces modules fonctionnent simultanément mais peuvent faire l'objet d'un arrêt à des fins d'opérations de maintenance. Des robinets ou vannes permettent d'isoler les modules.

Seul le module 300a est décrit précisément. Ce module 300a comprend un échangeur 310a et une chaudière 320a. Comme décrit plus haut, il s'agit d'une chaudière à gaz à foyer fermé à condensation. Le gaz est fourni par un module d'alimentation en gaz référencé 330a. Le module d'alimentation en gaz comprend deux bouteilles 331a et 332a de type à carburation disposées comme décrit plus haut horizontalement avec les orifices orientés vers le haut. Le gaz venant des bouteilles passe par un détendeur à membrane 333a puis dans un ballon de détente 334a et par un régulateur de débit 335a avant d'alimenter la chaudière 320a.

L'orientation judicieuse des bouteilles 331a et 332a permet l'utilisation d'un détendeur à membrane 333a et un de type ballon 334a sans nécessiter un carburateur. L'eau devient chaude au niveau de l'échangeur 310a.

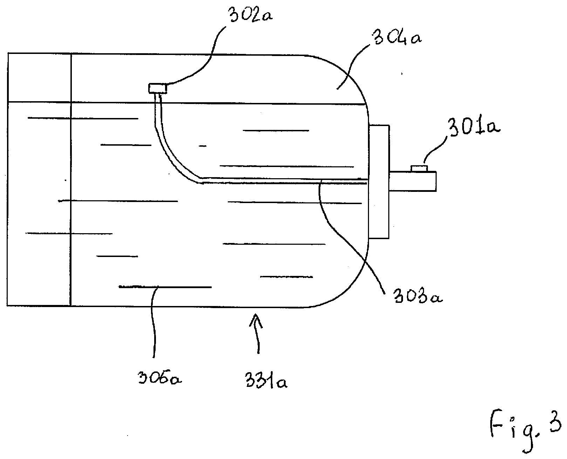

Comme illustrée par la figure 3 pour la bouteille 331a, l'orientation vers le haut de l'orifice d'ouverture 301a d'une bouteille de gaz de carburation de 13 kg de propane telle celle illustrée permet de systématiquement disposer l'extrémité 302a du tuyau interne de passage de gaz 303a dans la partie du volume interne de la bouteille 331a correspondant au ciel gazeux 304a et non au volume de gaz liquéfié 305a.

Ces bouteilles sont transportées dans le dispositif D. Le dispositif est donc autonome en ce qui concerne l'alimentation en gaz. L'alimentation en électricité est elle fournie en se branchant sur le réseau mais au moyen d'un module d'alimentation (non illustré) équipé d'un dispositif de vérification des phases afin qu'elle soit en adéquation avec le fonctionnement des chaudières. En cas de phase non adéquate, un redresseur (non illustré) est utilisé.

Comme illustrés, bien qu'identiques, les modules 300a, 300b et 300c sont disposés selon un certain ordre (de l'amont vers l'aval) par rapport au flux d'alimentation issu de la conduite d'eau froide 640. Afin d'éviter qu'un module ne fonctionne plus qu'un autre, l'ordre défini par la position du module en regard de la conduite d'entrée d'eau froide 640 est inversé par rapport à l'ordre défini par la position du module (c'est à dire en regard de la conduite de sortie d'eau chaude. Ainsi, comme le module 300a est en premier alimenté en eau froide par la conduite 640, le module 300b étant alimenté en second et le module 300c en troisième, l'eau chaude issue du module 300c se confond avec la conduite de sortie d'eau chaude 650 dans laquelle vient s'injecter l'eau chaude issue du module plus éloigné 300b mélangée à l'eau chaude issue du module le plus éloigné 300a.

Le sous-ensemble de traitement de l'eau 400 traite l'eau venant de l'entrée E et est équipé d'au moins une cartouche interchangeable 410 contenant des produits de traitement en tablette se dissolvant sous l'action de l'eau en mouvement tel que décrit dans plusieurs des documents de l'art antérieur. Cette cartouche 410 vient se fixer de façon démontable sur un corps 420 dans lequel passe l'eau à traiter. Conformément à l'invention, ce corps est équipé autour de l'orifice dans lequel se loge la cartouche 410 d'un bac de récupération 430 de l'eau qui s'écoule lors du changement de cartouche 410.

Les vannes trois voies 700 permettent d'utiliser ou non ce sous-ensemble 400. L'utilisation de vannes trois voies évite l'exploitation du sous-ensemble de traitement 400 avec le sous-ensemble de production d'eau chaude 300 afin que le traitement chimique ne soit pas neutralisé par l'eau chaude.

Le sous-ensemble d'injection dosée d'eau froide 500 exploite l'eau venant de l'entrée E et comprend une pompe doseuse 510 disposée en aval d'un limiteur de pression 520 et du robinet 800 afin d'injectant dans la conduite de sortie du dispositif l'eau froide pour réguler si nécessaire le volume d'eau traitée, le flux et la température de l'eau issu des autres sous-ensembles fonctionnels.

On comprend que le dispositif qui vient d'être ci-dessus décrit et représenté, l'a été en vue d'une divulgation plutôt que d'une limitation. Bien entendu, divers aménagements, modifications et améliorations pourront être apportés aux exemples ci-dessus, sans pour autant sortir du cadre de l'invention défini par les revendications.

## Revendications

1. Dispositif (D) de services liés à la fourniture d'eau chaude, au traitement de l'eau, au nettoyage de toutes surfaces fixes ou mobiles, dispositif mobile et comprenant un châssis interne (120) accueillant en partie basse un bac de récupération (100) d'éventuels fluides et
un sous-ensemble de production d'eau chaude (300) avec au moins une chaudière à condensation (320a) associée à au moins un module d'alimentation en gaz (330a) formé par une pluralité de réservoirs de gaz stockant dans leur volume interne le gaz à l'état liquide en partie basse et à l'état gazeux en partie haute, lesdits réservoirs étant équipés chacun d'un tuyau de passage du gaz reliant la partie haute contenant le gaz à l'état gazeux à un orifice d'ouverture,
- un sous-ensemble de traitement de liquide (400), et
- un sous-ensemble d'injection dosée d'eau froide (500),
**CARACTÉRISÉ PAR LE FAIT QUE** le dispositif est constitué par un véhicule de type camion ou camionnette équipée d'un volume utile dans lequel sont disposés le châssis et les différents sous-ensembles (300, 400, 500) sur le châssis, et
le sous-ensemble fonctionnel de traitement de liquide (400) est un sous-ensemble de traitement de liquide par dissolution d'un produit de traitement solide dans un flux dudit liquide, ledit produit de traitement solide étant conditionné sous forme de tablettes empilées dans des cartouches interchangeables (410) se fixant de façon démontable dans une embase, l'embase dans laquelle s'introduit ladite cartouche étant équipée d'un bac (430) de récupération de l'eau susceptible de couler pendant le changement de cartouche (410).

2. Dispositif (D) selon la revendication 1, **CARACTÉRISÉ PAR LE FAIT QUE** les réservoirs de gaz sont formés
par une pluralité de bouteilles de gaz de type de carburation (331a, 332a) stockant dans leur volume interne le gaz à l'état liquide en partie basse et à l'état gazeux en partie haute,
lesdites bouteilles de gaz étant disposées, dans le châssis interne (120) sensiblement horizontalement et avec l'orifice d'ouverture orienté vers le haut de sorte que l'extrémité du tuyau de passage du gaz débouche sur une partie gazeuse allongée plus grande.

3. Dispositif selon l'une quelconque des revendications 1 à 2, **CARACTÉRISÉ PAR LE FAIT QU'**il comprend :
au moins une conduite d'entrée (E) et des câbles électriques pour se connecter à une source d'alimentation en eau froide ainsi qu'à une source d'alimentation en électricité,
au moins une conduite de sortie (S) lui permettant de venir se connecter à l'installation nécessitant son intervention comme :
- le réseau d'eau potable d'un véhicule tel d'un aéronef,
- les canalisations d'une installation où circule un liquide alimentaire,
- un réseau d'eau nécessitant de l'eau chaude,
- toutes surfaces à nettoyer fixes ou mobiles.

4. Dispositif selon l'une quelconque des revendications 1 à 2, **CARACTÉRISÉ PAR LE FAIT QUE** le sous-ensemble de production d'eau chaude (300) comprend une pluralité de chaudières à gaz à condensation indépendantes.

5. Dispositif selon la revendication 4, **CARACTÉRISÉ PAR LE FAIT QU'**il comprend une conduite d'entrée (E) de l'eau froide et une conduite de sortie (S) d'eau chaude, l'ordre d'alimentation en eau froide des chaudières défini par leur position par rapport à la conduite d'entrée de l'eau froide est inversé par rapport à l'ordre de sortie d'eau chaude défini par leur position par rapport à la conduite de sortie de l'eau chaude.

6. Dispositif selon la revendication 1, **CARACTÉRISÉ PAR LE FAIT QUE** le sous-ensemble d'injection dosée d'eau froide (500) comprend une pompe doseuse en eau froide injectant dans la conduite de sortie du dispositif l'eau froide pour réguler le flux et la température.

7. Dispositif selon l'une quelconque des revendications 1 à 2, **CARACTÉRISÉ PAR LE FAIT QU'**il comprend, en sus d'un module d'alimentation en gaz, un module d'alimentation en électricité équipé d'un moyen de contrôle de polarité vérifiant que cette dernière soit compatible avec l'alimentation des chaudières un redresseur étant activé dans le cas contraire.

## Patentansprüche

1. Servicevorrichtung (D) für die Bereitstellung von Warmwasser, die Wasseraufbereitung und die Reinigung jeglicher feststehenden oder bewegbaren Oberflächen, wobei die Vorrichtung mobil ist und umfasst: einen inneren Rahmen (120), der im unteren Teil einen Behälter (100) zum Auffangen eventueller Flüssigkeiten aufnimmt,
eine Untereinheit zur Erzeugung von Warmwasser (300) mit mindestens einem Brennwertkessel (320a), der mit mindestens einem Gasversorgungsmodul (330a) verbunden ist, das aus einer Vielzahl von Gasbehältern gebildet wird, die in ihrem Innenvolumen das Gas in flüssigem Zustand im unteren Teil und in gasförmigem Zustand im oberen Teil speichern, wobei die Behälter jeweils mit einem Gasdurchgangsrohr ausgerüstet sind, das den oberen Teil, der das Gas im gasförmigen Zustand enthält, mit einer Öffnungsmündung verbindet,
- eine Untereinheit zur Flüssigkeitsaufbereitung (400) und
- eine Untereinheit zum dosierten Einspritzen von kaltem Wasser (500),
**DADURCH GEKENNZEICHNET, DASS** die Vorrichtung aus einem Fahrzeug vom Typ Lastwagen oder Kleinlaster besteht, das mit einem Nutzvolumen ausgestattet ist, in dem der Rahmen und die verschiedenen Untereinheiten (300, 400, 500) auf dem Rahmen angeordnet sind und
die funktionelle Untereinheit zur Flüssigkeitsaufbereitung (400) eine Untereinheit zur Aufbereitung von Flüssigkeit durch Auflösen eines festen Aufbereitungsprodukts in einem Strom dieser Flüssigkeit ist, wobei das feste Aufbereitungsprodukt in Form von Tabletten verpackt ist, die in austauschbaren Patronen (410) gestapelt sind, die abnehmbar in einem Sockel befestigt sind, wobei der Sockel, in den die Patrone eingeführt wird, mit einem Behälter (430) zum Auffangen des Wassers ausgestattet ist, das während des Austauschs der Patrone (410) auslaufen kann.

2. Vorrichtung (D) nach Anspruch 1, **DADURCH GEKENNZEICHNET, DASS** die Gasbehälter durch eine Vielzahl von Treibgasflaschen (331a, 332a) gebildet werden, die in ihrem Innenvolumen Gas in flüssigem Zustand im unteren Teil und in gasförmigem Zustand im oberen Teil speichern.
Die Gasflaschen sind in dem inneren Rahmen (120) im Wesentlichen horizontal und mit der Öffnungsmündung nach oben gerichtet angeordnet, so dass das Ende des Gasdurchgangsrohrs in einen größeren, länglichen Gasteil mündet.

3. Vorrichtung nach einem der Ansprüche 1 und 2, **DADURCH GEKENNZEICHNET, DASS** sie umfasst:
mindestens eine Einlassleitung (E) und Elektrokabel zum Anschluss an eine Quelle der Kaltwasserversorgung sowie an eine Stromversorgungsquelle,
mindestens eine Auslassleitung (S), die es ihr ermöglicht, sich an die Installation anzuschließen, die den Eingriff erfordert, wie:
- das Trinkwassersystem eines Fahrzeugs, etwa eines Luftfahrzeugs,
- Rohrleitungen einer Installation, in der eine Lebensmittelflüssigkeit zirkuliert,
- ein Wassernetz, das Warmwasser benötigt,
- jegliche feststehenden oder bewegbaren zu reinigenden Oberflächen.

4. Vorrichtung nach einem der Ansprüche 1 bis 2, **DADURCH GEKENNZEICHNET, DASS** die Untereinheit zur Warmwassererzeugung (300) eine Vielzahl von unabhängigen Gasbrennwertkesseln umfasst.

5. Vorrichtung nach Anspruch 4, **DADURCH GEKENNZEICHNET, DASS** sie eine Kaltwassereinlassleitung (E) und eine Warmwasserauslassleitung (S) umfasst, wobei die Reihenfolge der Kaltwasserversorgung der Kessel, die durch ihre Position in Bezug auf die Kaltwassereinlassleitung definiert ist, in Bezug auf die Reihenfolge der Warmwasserversorgung, die durch ihre Position in Bezug auf die Warmwasserauslassleitung definiert ist, umgekehrt ist.

6. Vorrichtung nach Anspruch 1, **DADURCH GEKENNZEICHNET, DASS** die Untereinheit zur dosierten Kaltwassereinspritzung (500) eine Kaltwasserdosierpumpe umfasst, die in die Auslassleitung der Vorrichtung kaltes Wasser einspritzt, um den Strom und die Temperatur zu regulieren.

7. Vorrichtung nach einem der Ansprüche 1 bis 2, **DADURCH GEKENNZEICHNET, dass** sie zusätzlich zu einem Gasversorgungsmodul ein Stromversorgungsmodul umfasst, das mit einem Polaritätskontrollmittel ausgerüstet ist, das prüft, ob die Polarität mit der Versorgung der Heizkessel kompatibel ist, wobei im gegenteiligen Fall ein Gleichrichter aktiviert wird.

## Claims

1. Device (D) for services related to providing hot water, to water treatment, to the cleaning of any fixed or mobile surfaces, the device being mobile and comprising an internal chassis (120) housing in the lower part a tank (100) for recovering possible fluids and a subassembly (300) for producing hot water with at least one condensing boiler (320a) associated with at least one module (330a) for supplying gas formed by a plurality of gas reservoirs storing in their internal volume the gas in the liquid state in the lower part and in the gaseous state in the upper part, said reservoirs each being equipped with a pipe for passage of the gas connecting the upper part containing the gas in the gaseous state to an opening orifice,
- a subassembly for treating liquid (400),
- a subassembly for metered injection of cold water (500), **CHARACTERIZED BY** THE FACT THAT the device consists of a vehicle of the truck or van type equipped with a useful volume in which the chassis and the various subassemblies (300, 400, 500) on the chassis are disposed, and the functional subassembly (400) for treating liquid is a subassembly for treating liquid by dissolution of a solid treatment product in a flow of said liquid, said solid treatment product being packaged in the form of tablets stacked in interchangeable cartridges (410) being removably fastened in a base, the base into which said cartridge is inserted being equipped with a tank (430) for recovering the water capable of leaking during the changing of the cartridge (410).

2. Device (D) according claim 1, **CHARACTERIZED BY** THE FACT THAT the gas reservoirs are formed by a plurality of gas cylinders of the carburation type (331a, 332a) storing in their internal volume the gas in the liquid state in the lower part and in the gaseous state in the upper part,
said gas cylinders being disposed in the internal chassis (120) substantially horizontally and with the opening orifice oriented upwards so that the end of the pipe for passage of the gas opens onto a larger elongated gaseous part.

3. Device according to any one of claims 1 to 2, **CHARACTERIZED BY** THE FACT THAT it comprises:
at least one inlet duct (E) and electrical cables for connecting to a source for supplying cold water as well as to a source for supplying electricity,
at least one outlet duct (S) allowing it to connect to the facility requiring its intervention like:
- the potable-water network of a vehicle such as an aircraft,
- the lines of a facility in which a food liquid circulates,
- a water network requiring hot water,
- any fixed or mobiles surfaces to be cleaned,
- etc.

4. Device according to any one of claims 1 to 2, **CHARACTERIZED BY** THE FACT THAT the subassembly (300) for producing hot water comprises a plurality of independent condensing gas boilers.

5. Device according to claim 4, **CHARACTERIZED BY** THE FACT THAT it comprises a duct (E) for inlet of the cold water and a duct (S) for outlet of hot water, the order of supply of cold water to the boilers defined by their position with respect to the duct for inlet of the cold water is inversed with respect to the order of outlet of hot water defined by their position with respect to the duct for outlet of the hot water.

6. Device according to claim 1, **CHARACTERIZED BY** THE FACT THAT the subassembly (500) for metered injection of cold water comprises a cold-water metering pump injecting the cold water into the outlet duct of the device to regulate the flow and the temperature.

7. Device according to any one of claims 1 to 2, **CHARACTERIZED BY** THE FACT THAT it comprises, in addition to a module for supplying gas, a module for supplying electricity equipped with a means for controlling polarity verifying that the latter is compatible with the power supply of the boilers, a rectifier being activated if not.
